# EUROPEAN PATENT SPECIFICATION

(11) **EP 4 355 830 B1**
(45) Date of publication and mention of the grant of the patent: **13.05.2026**
(21) Application number: 22741939.7
(22) Date of filing: 21.06.2022
(51) Int. Cl.: C09D 5/00

(54) **COATING COMPOSITIONS, METHODS OF MAKING AND USING SAME**
BESCHICHTUNGSZUSAMMENSETZUNGEN, VERFAHREN ZUR HERSTELLUNG UND VERWENDUNG DAVON
COMPOSITIONS DE REVÊTEMENT, PROCÉDÉS DE FABRICATION DE CES DERNIÈRES ET LEUR UTILISATION

(30) Priority: 18.06.2021 US 202163202661 P
(43) Date of publication of application: 24.04.2024
(73) Proprietor: Perfect Carbon LLC, Saukville, WI 53080 (US)
(72) Inventor: LAUX, Joseph, John, 8272 Ermatingen (CH); SALVAGGIO, David, Grafton, WI 53074 (US); PILETTE, Thomas, Mark, Oxford, MI 48370 (US); JOHNSON, Erik, Saukville, WI 53080 (US)
(74) Representative: Gilani, Anwar
(86) International application number: PCT/US2022/034303
(87) International publication number: WO 2022/266545

(56) References cited:
- WO-A1-2020/167626
- CN-A- 109 627 933
- CN-A- 109 679 474
- CN-A- 112 300 641

## Description

### FIELD OF INVENTION

Coating compositions for protecting and enhancing previously applied coatings are described. More particularly, coating compositions that are dispersions comprising graphene and a hindered amine light stabilizer (HALS) are described. Methods of treating a surface, particularly a vehicle surface (e.g., a carbon-fiber automobile body surface, a vinyl wrapped carbon-fiber automobile body surface, and fiber glass panels), including applying the foregoing coating compositions are also described.

### BACKGROUND OF INVENTION

Original equipment manufacturers (OEM) use many different types of materials to combine aesthetics, safety, weight, and durability characteristics. For example, vehicle exteriors may be manufactured from a combination of traditional materials, such as metals, metal alloys, rubbers, polymers (e.g. vinyl), fiber glass, with newer materials, such as carbon fibers and new polymer materials.

Many automotive and household products such as automobiles, boats, luggage, and outdoor furniture include surfaces comprising fiber-reinforced polymer materials. In particular, vehicle exteriors, particularly for premium vehicles, are commonly manufactured from fiber-reinforced polymer materials because fiber based composite materials, particularly carbon-fiber based materials, are able to provide exceptional structural performance while achieving significant weight savings, thereby allowing significant increases in vehicle performance. Environmental factors such as heat, ultra-violet light, ozone, and dirt can prematurely age and damage these materials. In particular, yellowing of carbon-fiber based polymer composite materials is a well-known issue that can cause the appearance of premium vehicles to become less attractive over time. As a result, protection products have been developed to clean, preserve, and protect metal, carbon-fiber containing-, fiber glass containing-, rubber, plastic, and vinyl surfaces against the harmful effects of the environment, and even to improve the appearance of these surfaces.

Conventional protection products often include different types of waxes, e.g., carnauba wax. While waxes provide some protection from UV-light induced degradation, that protection is typically short-lived. Moreover, these products are often difficult to apply and/or require significant effort removal of residues after application.

Sealant-type protection products typically last longer and can be relatively easier to apply. Currently available sealant-type protection products are generally provided as liquids which are sprayed onto a surface. Such sprayable liquid protection products often exhibit poor coverage characteristics and result in significant losses from overspray. Representative commercially available prior art sealant product may include a reactive silane in a solvent system to form a protective coating as the product is applied.
CN112300641 discloses a self-cleaning coating for aluminum alloy doors and windows and a preparation method thereof.
CN109679474 discloses a low-viscosity polyurethane material for wind power blades.
CN109627933 discloses an automobile coating and a processing technology thereof.
WO2020/167626 discloses methods of making multilayer systems comprising a sealant layer by extruding a coreactive sealant composition.

### SUMMARY

Provided herein are coating compositions according to claim 1. The coating compositions can be either dispersions of graphene in a single-phase liquid or dispersions of solid graphene in a multi-phase system of two or more immiscible liquids.

In certain refinements, the dispersion comprises a liquid, a hindered amine light stabilizer (HALS) dissolved and/or dispersed in the liquid, and graphene dispersed in the liquid, wherein the liquid is a single-phase liquid. The single-phase liquid may comprise an aqueous solvent system or an organic solvent system. The graphene comprises graphene nanoplatelets (GNPs), graphene oxide nanoplatelets (GNOPs), or a combination thereof.

In certain refinements, the dispersion is an emulsion having an aqueous phase and an organic phase, and the graphene is present in either the aqueous phase, the organic phase, or in both the aqueous phase and the organic phase. Similarly, the HALS may be present in either the aqueous phase, the organic phase, or in the aqueous phase and the organic phase. The aqueous phase includes an aqueous solvent and the organic phase includes an organic solvent. The graphene comprises graphene nanoplatelets (GNPs), solid graphene oxide nanoplatelets (GNOPs), or a combination thereof.

Also provided are kits for coating a surface comprising a coating composition of the disclosure. The kit may comprise a container of the coating composition of the present disclosure, and an applicator, for example, a microfiber towel or a "block" applicator or a foam applicator.

Also provided are carbon-fiber automobile panels comprising surfaces treated with a coating composition of the disclosure. Vinyl automobile body wraps comprising surfaces treated with a coating composition of the disclosure are also provided.

The disclosure further provides methods of surface treating a vehicle body comprising applying a layer of a composition of the disclosure to a surface of the vehicle body and optionally drying the layer(s) to form a cured, protective coating on the vehicle body.

Further aspects of the disclosure may become apparent to those skilled in the art from a review of the following detailed description, taken in conjunction with the examples and appended claims. While the invention is susceptible to embodiments in various forms, described herein are specific embodiments of the invention with the understanding that the disclosure is illustrative, and is not intended to limit the invention to specific embodiments described herein.

### DETAILED DESCRIPTION

Provided herein are coating compositions comprising graphene and a hindered amine light stabilizer (HALS). The coating compositions of the disclosure can be used for surface treatment, such as for surface treatment, protection, and enhancement of an automobile, a boat, a piece of luggage, or outdoor furniture. In general, the coating compositions can be applied to metal, plastic, and other substantially non-porous substrates. The coating compositions are particularly useful for surface treatment of surfaces made of carbon fiber and/or fiber glass.

For example, the coating compositions of the disclosure can provide a protective coating for a surface of an article (e.g., a vehicle) that can both enhance the weatherability of the article and the UV protection of the coated surface. The coating compositions can also extend the lifespan of vehicle panels, and delay the onset of unsightly yellowing of the surface-treated panel attributable to UV-induced degradation processes, even relative to the use of compositions including traditional UV inhibitors. In embodiments, the compositions of the disclosure may advantageously extend UV weathering for at least an additional 1, 2, or 3 years, as measured using one or more Florida/Arizona exposure testing methods. Florida/Arizona testing may include, but is not limited to testing methods such as Direct & Under Glass Exposures (ASTM G7, G24, D1435), Black Box (ASTM D4141; GM 9163P), AIM Box (GM 9538P, 7455M, 7454M, 3619M; GMW 3417), Natural Atmospheric Corrosion (ASTM G50), Salt Accelerated Corrosion - SCAB (ASTM D6675), and Accelerated Weathering (ASTM G155). In particular Accelerated Weathering testing using a Xenon Arc Weatherometer can be used to demonstrate the advantageous performance of the coating compositions of the disclosure.

The unique coating composition formula has a wide range of substrate applications, including but not limited to painted clear coat surfaces, carbon fiber, fiberglass, gel coat for recreational vehicles (RVs) and boats, hard molded plastics, and carbon bicycle frames. The coating composition of the present disclosure advantageously shields coated surfaces from damage and/or degradation caused by environmental factors such as destructive ultraviolet rays, heat, moisture, and/or dirt. After application, the coating composition is believed to bond with the underlying substrate surface and thereby provides a (further) layer of protective clear coat that is capable of protecting the substrate from such environmental factors. Beneficially, the coating is also simple to apply, typically, using a spray applicator directly to a substrate to be treated and/or to an applicator which is then used to apply the coating composition to the substrate to be treated.

Additionally, the coating compositions of the disclosure can reduce the buildup of surface contaminants (e.g., dirt, salt, etc.), improve the coefficient of drag, reduce surface tension of the surface to which it is applied, improve scratch and mar protection, and reduce the number of washes and/or waxes needed for the treated surface, e.g., for a vehicle such as a car, a boat, etc.

### COATING COMPOSITIONS

The coating compositions of the disclosure are provided as a dispersion of graphene in a single-phase liquid or as a dispersion of graphene in a multi-phase system of two or more immiscible liquids.

In addition, in embodiments, the coating compositions may be provided as two separate, discrete phases that can be mixed by a consumer when application is desired so as to provide a dispersion of graphene in a multi-phase system of two or more immiscible liquids.

All coating compositions of the disclosure include graphene, which is dispersed as a solid in the coating compositions. The graphene can include graphene nanoplatelets (GNPs), graphene oxide nanoplatelets (GONPs), or a combination thereof. In embodiments, the graphene includes GNPs. In embodiments, the graphene includes GONPs. In embodiments, the graphene includes GNPs and GONPs. The graphene can have an average mass median diameter (D50) of about 200 nm to about 20,000 nm, for example at least about 200 nm, at least about 250 nm, at least about 300 nm, at least about 500 nm, at least about 1000 nm, at least about 1250 nm, at least about 1500 nm, at least about 1750 nm, at least about 2000 nm, at least about 2500 nm, at least about 3000 nm, at least about 3500 nm, and/or at least about 4000 nm and/or up to about 2500 nm, up to about 3000 nm, up to about 3500 nm, up to about 4000 nm, up to about 4500 nm, up to about 5000 nm, up to about 7000 nm, up to about 8000 nm, up to about 9000 nm, up to about 10,000 nm, and/or up to about 15,000 nm, such as from about 200 nm to about 15,000 nm, from about 200 nm to about 10,000 nm, from about 200 nm to about 5000 nm, from about 500 nm to about 15,000 nm, from about 500 nm to about 10,000 nm, from about 500 nm to about 5000 nm, from about 1000 nm to about 15,000 nm, from about 1000 nm to about 10,000 nm, or from about 1000 nm to about 5000 nm. In embodiments, the graphene has an average mass median diameter of about 1000 nm to about 3000 nm, from about 2000 nm to about 4000 nm, or from about 1000 nm to about 10,000 nm. The graphene can have a D90 value of less than 30,000 nm, for example, of less than 20,000 nm.

As used herein, the term "aspect ratio" refers to the ratio of width to height a particle. In general, GNPs and GONPs having an aspect ratio between 2000 and 15000, and optionally less than 10000, or less than 7500,may be used. Surprisingly, it has been found that graphene having an aspect ratio of 2000 to 15,000, in combination with a ceramic film-forming agent and a HALS as disclosed herein, provides an effective protective coating composition comparable in performance to an OEM clear coat for over 750 hours of testing as described in the examples. Coating compositions containing graphene have an aspect ratio between 2000 and 15,000, for example, between 1000 and 7500.

The graphene can have a BET surface area between about 150 m²/g and about 600 m²/g, for example, the graphene can have a BET surface area between about 175 m²/g and about 500 m²/g, between about 200 m²/g and about 400 m²/g. between about 250 m²/g and about 350 m²/g, pr between about 275 m²/g and about 375 m²/g.

As used herein, the term "about" means +/- 10% of any recited value, or in an alternative embodiment, +/- 5% of any recited value. As used herein, this term modifies any recited value, range of values, or endpoints of one or more ranges.

The nanoplatelets (i.e., the graphene nanoplatelets or the graphene oxide nanoplatelets) can have, on average, from about 1 layer to about 10 layers, for example at least about 1, 2, 3, 4, 5, or 6 layers and/or up to about 5, 6, 7, 8, 9, or 10 layers. In embodiments, the nanoplatelets have 3 to 10 layers, for example, 3 to 7 layers and/or 3 to 5 layers.

The graphene can be present in an amount of about 0.001 wt% to about 5 wt%, based on the total weight of the composition, for example at least about 0.002, 0.005, 0.01, 0.025, 0.05, 0.075, 0.1, 0.25, 0.5, 0.75, 1, 1.5, or 2 wt% and/or up to about 0.05, 0.1, 0.5, 1, 1.5, 2, 2.5, 3, 3.5, 4, or 4.5 wt%, such as from about 0.002 wt% to about 4.5 wt%, from about 0.005 wt% to about 4 wt%, from about 0.01 wt% to about 3.5 wt%, from about 0.05 wt% to about 3 wt%, from about 0.1 wt% to about 2.5 wt%, from about 0.1 wt% to about 1 wt%, from about 0.25 wt% to about 2 wt%, or from about 0.25 wt% to about 2 wt%. Surprisingly, it has been found that as little as about .04 wt.% graphene, in combination with a ceramic film-forming agent and a HALS as disclosed herein, provides an effective protective coating composition comparable in performance to an OEM clear coat for over 750 hours of testing as described in the examples. Coating compositions containing between about 0.02 wt.% and about 0.20 wt.%, for example, between about 0.03 wt.% and about 0.15 wt.%, or between about 0.4 wt.% and about 0.15 wt.% graphene are therefore generally preferred. It should be noted that wt.%, as used herein, refers to the weight of the active, not the weight of the source material used to provide the active, unless otherwise specified.

All coating compositions of the disclosure also include a hindered amine light stabilizer (HALS), which can scavenge free radicals generated, typically as a result of photo-induced degradation of a polymer material. HALS having structures based on piperidine, for example, tetramethylpiperidine, and derivatives of the foregoing are well-known. A HALS molecule's active amine group is typically hydrogen- (NH), alkyl- (NR), or alkoxy- (NOR) based. Alkoxy-based (NOR) HALS are generally preferred for use in the coating compositions according to the disclosure. Examples of suitable commercially available sources of HALS include but are not limited to, those under the tradename Tinuvin^{®} (BASF SE, DE), such as, e.g., Tinuvin^{®} 123-DW (N), Tinuvin^{®} 123, Tinuvin^{®} 152, Tinuvin^{®} 249-DW (N), Tinuvin^{®} 249, Tinuvin^{®} 293, Tinuvin^{®} 5333-DW (N), and/or Tinuvin^{®} 5100. Examples of additional suitable commercially available sources of HALS include but are not limited to, those under the tradenames Cyasorb^{®} (Solvay SA, BE).

Suitable hindered amine light stabilizers can have a pKa associated with the functional group that provides light stability (e.g., the piperidinyl functional group) of about 2 to about 8, for example at least about 2, 2.5, 3, 3.5, or 4 and/or up to about 4, 5, 5.5, 6, 6.5, 7, 7.5, or 8, such as about 2 to about 7, about 2.5 to about 6.5, about 3 to about 6, about 3.5 to about 5.5, or about 4 to about 5. In embodiments, the hindered amine light stabilizer has a pKa associated with the functional group that provides light stability in a range from about 3.5 to about 4.5, about 6 to about 7, or about 6 to about 7.5.

The hindered amine light stabilizer can have any suitable molecular weight. For example, the HALS can have a number average molecular weight (M_{N}) of about 200 g/mol to about 10000 g/mol, for example at least about 200 g/mol, at least about 250 g/mol, at least about 300 g/mol, at least about 1000 g/mol, at least about 2500 g/mol, and/or up to about 2500 g/mol, up to about 3000 g/mol, up to about 5000 g/mol, and/or up to 10,000 g/mol. In embodiments, the hindered amine light stabilizer has a number average molecular weight of about 250 g/mol to about 7500 g/mol, about 500 g/mol to about 5000 g/mol, about 1000 g/mol to about 5000 g/mol, and/or about 1500 g/mol to about 5000 g/mol.

The hindered amine light stabilizer can be present in the coating compositions of the disclosure in an amount of about 0.05 wt% to about 5 wt%, based on the total weight of the composition, for example at least about 0.05, 0.1, 0.25, 0.5, 0.75, 1, 2, or 3 wt% and/or up to about 0.5, 0.75, 1, 1.5, 2, 2.5, 3, 4, or 5 wt%, based on the total weight of the coating composition. In embodiments, the HALS is present in an amount of about 0.05 wt% to about 4 wt%, about 0.05 wt% to about 3 wt%, about 0.05 wt% to about 2 wt%, about 0.05 wt% to about 1 wt%, about 0.1 wt% to about 1 wt%, about 0.1 wt% to about 2 wt%, about 0.1 wt% to about 5 wt%, about 0.5 wt.% to about 1.5 wt.%, or about 0.5 wt% to about 2.5 wt%.

The graphene and hindered amine light stabilizer can be present in the coating compositions of the disclosure in a weight ratio of graphene to HALS of about 1:5000 to about 100:1, for example, at least about 1:5000, for example, at least about 1:4000, at least about 1:3000, at least about 1:1000, at least about 1:500, at least about 1:250, at least about 1:100, or at least about 1:50 and/or up to about 1:100, up to about 1:50, up to about 1:25, up to about 1:10, up to about 1:5, up to about 1:2, up to about 1:1, up to about 2:1, up to about 5:1, up to about 10:1, up to about 30:1, up to about 40:1, up to about 50:1, up to about 75:1, or up to about 100:1. In embodiments, the graphene and the hindered amine light stabilizer are present in a weight ratio of graphene to HALS of about 1:5000 to about 75:1, about 1:4000 to about 50:1, about 1:1000 to about 50:1, about 1:500 to about 10:1, about 1:500 to about 100:1, or about 1:100 to about 100:1.

All coating compositions according to the invention include a ceramic film-forming agent. In embodiments, the ceramic film-forming agent comprises a reactive silicone polymer. Suitable reactive silicone polymers are organosilanes. Organosilanes that are polysiloxane precursors may be used. Representative organosilanes may include quaternary ammonium groups, for example. Organosilane quaternary ammonium compounds having the following formula may be included in the coating compositions according to the disclosure: 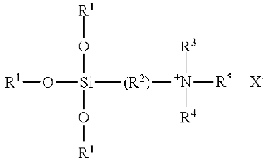 wherein R¹=hydrogen and/or C₁ to C₄ alkyl; R²=divalent hydrocarbon with C₁ to C₈ carbon atoms; R³=hydrogen or C₁ to C₄ alkyl; R⁴=hydrogen or C₁ to C₁₀ alkyl; R⁵=C₈ to C₂₂ saturated or unsaturated hydrocarbon radical and X=halide, for example, chloride. Suitable organosilanes that may be used as the film-forming agent in the coating compositions according to the disclosure include but are not limited to 3-(trimethoxysilyl)propyldimethyloctadecyl ammonium chloride, 3-(trimethoxysilyl)propyldimethyldecyl ammonium chloride, 3-(trimethoxysilyl)propyldimethyldodecyl ammonium chloride, 3-(trimethoxysilyl)propyldidecylmethyl ammonium chloride, 3-(trimethoxysilyl)propyltetradecyldimethyl ammonium chloride, 3-(trimethoxysilyl)propyldimethylhexadecyl ammonium chloride, 3-(trimethoxysilyl)propyldimethylsoya ammonium chloride, 3-(trimethoxysilyl)propyldimethyloleyl ammonium chloride, 3-(trimethoxysilyl)propyldimethylpalmitoleyl ammonium chloride, 3-(trimethoxysilyl)propyldimethylicosyl ammonium chloride, 3-(trihydroxysilyl)propyldimethyloctadecyl ammonium chloride, 3-(trimethoxysilyl)propyloctyl ammonium chloride, 3-(trimethoxysilyl)propyldecyl ammonium chloride, 3-(trimethoxysilyl)propyltetradecyl ammonium chloride, 3-(trimethoxysilyl)propyltetradecenyl ammonium chloride, 3-(trimethoxysilyl)propylhexadecyl ammonium chloride, 3-(trimethoxysilyl)propylpalmitoleyl ammonium chloride, 3-(trimethoxysilyl)propyloctadecyl ammonium chloride, 3-(trimethoxysilyl)propyloleyl ammonium chloride, 3-(trimethoxysilyl)propyldocosyl ammonium chloride, 3-(trimethoxysilyl)propylicosyl ammonium chloride, 3-(trimethoxysilyl)propyldimethylmyristoleyl ammonium chloride, and 3-(trimethoxysilyl)propyldimethyldocosyl ammonium chloride, and mixtures thereof. Examples of suitable commercially available sources of organosilane-based ceramic film-forming agents include but are not limited to, those under the tradename Flexipel^{™}(Innovative Chemical Technologies, Inc., USA), such as, e.g., Flexipel^{™} Q-50 and Flexipel^{™} Q-1000. Examples of additional suitable commercially available sources of organosilane-based film forming agents include but are not limited to, those sold by Momentive Performance Materials, Inc., USA, such as SM2059.

The ceramic film-forming agent can be present in an amount of about 0.001 wt% to about 5 wt%,or 0.001 wt% to about 8 wt%, based on the total weight of the composition, for example at least about 0.002, 0.005, 0.01, 0.025, 0.05, 0.075, 0.1, 0.25, 0.5, 0.75, 1, 1.5, or 2 wt% and/or up to about 0.05, 0.1, 0.5, 1, 1.5, 2, 2.5, 3, 3.5, 4, or 4.5 wt%, such as from about 0.002 wt% to about 4.5 wt%, from about 0.005 wt% to about 4 wt%, from about 0.01 wt% to about 3.5 wt%, from about 0.05 wt% to about 3 wt%, from about 0.1 wt% to about 3 wt%, from about 0.1 wt% to about 2.5 wt%, from about 0.25 wt% to about 4 wt%, or from about 0.25 wt% to about 2 wt%. Surprisingly, it has been found that greater than about 2 wt% of the ceramic film-forming agent, particularly between about 2 wt.% and 5 wt.% of the ceramic film-forming agent provides an effective protective coating composition comparable in performance to an OEM clear coat, with excellent hydrophobicity over 750 hours of testing as described in the examples.

In embodiments, the coating compositions may further comprise a near-infrared (NIR) reflective polymer. Examples of suitable NIR reflective polymers include, but are not limited to, aliphatic thermoplastic urethanes and polycaprolactams (i.e., Nylon 6 or PA6). Without intending to be bound by theory, the NIR reflective polymer can be present in an organic phase or an aqueous phase. When present in the organic phase, the NIR polymer may not be fully soluble in the organic phase solvent(s), but may be swellable. Therefore, the advantages of the NIR reflective polymer can be achieved by using micronized versions of the polymers as components in the organic phase. In embodiments, the NIR polymer is soluble in water. The NIR reflective polymer can be present in an amount of about 0.5 wt% to about 5 wt%, based on the total weight of the composition, for example at least about 0.5 wt%, at least about 1 wt%, at least about 1.25 wt%, at least about 1.5 wt%, at least about 1.75 wt%, at least about 2 wt%, at least about 2.25 wt%, at least about 2.5 wt%, at least about 2.75 wt%, or at least about 3 wt% and/or up to about 2 wt%, up to about 2.25 wt%, up to about 2.5 wt%, up to about 2.75 wt%, up to about 3 wt%, up to about 3.25 wt%, up to about 3.5 wt%, up to about 4 wt%, up to about 4.5 wt%, or up to about 5 wt%, such as between about 0.5 wt% to about 4 wt%, between about 1 wt% to about 3 wt%, between or about 1 wt% to about 5 wt%. In embodiments, the NIR polymer is present in an amount of about 2 wt%, based on the total weight of the composition.

The coating compositions of the disclosure further include a UV absorber having a structure based on triazine, benzophenone, or benzotriazole, for example, structures based on tris-resorcinol triazine, are well-known. Without intending to be bound by theory, the UV absorber can be present in an organic phase or an aqueous phase. Examples of suitable commercially available UV absorbers include but are not limited to, those under the tradename Tinuvin^{®} commercially available from BASF, such as, e.g., Tinuvin^{®} 400, Tinuvin^{®} 400-DW (N), Tinuvin^{®} 477, Tinuvin^{®} 477-DW (N), Tinuvin^{®} 479-DW (N), Tinuvin^{®} 1130. In embodiments, the UV absorber is present in an amount of about 0.01 wt% to about 2 wt%, about 0.05 wt% to about 2 wt%, about 0.05 wt% to about 1.5 wt%, about 0.05 wt% to about 1 wt%, about 0.1 wt% to about 1 wt%, about 0.1 wt% to about 2 wt%, about 0.1 wt% to about 1.5 wt%, about 0.5 wt% to about 1.5 wt%, or about 0.5 wt% to about 2 wt%.

The coating compositions of the disclosure can further include one or more types of additives. Suitable additives can include, but are not limited to, colorants, pigments such as titanium dioxide to help avoid film degradation caused by UV absorption, dispersants, preservatives, and surfactants.

In embodiments, the composition includes a blue colorant. The blue colorant can include an inorganic pigment or an organic dye. In embodiments, the blue colorant is an inorganic pigment. In embodiments, the blue colorant is an organic dye. In embodiments, the blue colorant is soluble in the organic phase. Without intending to be bound by theory, presence of a blue colorant can further delay the onset of discoloration of the coating and thus any treated surfaces by separating visible and nonvisible UV wavelengths. The blue colorant is believed to be most effective in minimizing or delaying the onset of discoloration (e.g., yellowing) of a surface when it is provided near the upper surface of a coating. By providing the blue colorant in the organic phase, the blue colorant is advantageously preferentially provided near the surface of the (dried) coating. The blue colorant can be present in an amount of about 0.0001 wt% to about 0.05 wt%, based on the total weight of the composition, for example at least about 0.0001, 0.0005, 0.001, 0.005, 0.0075, or 0.01 wt% and/or up to about 0.005, 0.01, 0.02, 0.03, 0.04, or 0.05 wt%, based on the total weight of the coating. In embodiments, the blue colorant is present in an amount of about 0.001 wt% to about 0.05 wt%, about 0.01 wt% to about 0.05 wt%, or about 0.005 wt% to about 0.05 wt%.

In embodiments, the composition includes titanium dioxide. In embodiments, the titanium dioxide is provided as titanium dioxide nanoparticles. For example, the titanium dioxide can have an average particle size of about 100 nm or less, for example about 100, about 90, about 80, about 75, about 60, about 50, about 40, about 30, about 20, about 10, about 5, or about 1 nm. The titanium dioxide can be present in an amount of about 0.001 wt% to about 1 wt%, for example at least about 0.001 wt%, 0.005 wt%, 0.01 wt%, 0.05 wt%, 0.075 wt%, 0.1 wt% or 0.2 wt% and/or up to about 0.05 wt%, 0.075 wt%, 0.1 wt%, 0.2 wt%, 0.25 wt%, 0.3 wt%, 0.4 wt%, or 0.5 wt%, based on the total weight of the composition. In embodiments, the titanium dioxide is present in an amount of about 0.001 wt% to about 0.5 wt%, about 0.01 wt% to about 0.05 wt%, or about 0.005 wt% to about 0.5 wt%. Without intending to be bound by theory, the titanium dioxide should be included in an amount at which UV-induced catalytic reactions with the titanium dioxide do not occur.

The composition can include a preservative. Examples of suitable preservatives include thiomersal, phenol, phenoxyethanol, benzethonium chloride, and the like.

The coating compositions may optionally further comprise a wax, such as carnauba wax. Thus, the coating compositions may be free of a wax. As used herein, "free of" means that the coating composition contains insignificant amounts of the indicated component. For example, the coating composition contains less than 0.10 wt. wax, less than 0.05 wt% wax, or even 0 wt.% wax, based on the weight of the coating composition.

### COATING COMPOSITIONS PROVIDED AS DISPERSIONS IN A SINGLE-PHASE LIQUID

When a coating composition is provided as a dispersion in a single-phase liquid, the single phase may be aqueous or organic. The solid graphene nanoplatelets (GNPs), solid graphene oxide nanoplatelets (GNOPs), or a combination thereof are dispersed in the single phase. The single-phase liquid may be an aqueous fluid, or a combination of miscible aqueous fluids, or an organic fluid, or a combination of miscible organic fluids.

When the single-phase liquid is aqueous, the aqueous single-phase includes an aqueous solvent, optionally, in further combination with one or more water-miscible, polar, protic solvents. In embodiments, the aqueous solvent comprises deionized (DI) water. Suitable water-miscible, polar, protic solvents include but are not limited to isopropyl alcohol, ethanol, ethylene glycol monobutyl ether, or a combination of the foregoing. Furthermore, when the single-phase liquid is aqueous, the aqueous single-phase can be present in an amount of about 60 wt% to about 99 wt%, based on the total weight of the coating composition, for example at least about 65, 70, 75, 80, 85, 90, or 95 wt%, based on the total weight of the coating composition.

When the single-phase liquid is organic, the organic single-phase includes an organic solvent, optionally in combination with one or more additional miscible organic solvents. Suitable organic solvents include but are not limited to aromatic hydrocarbons, aliphatic hydrocarbons, halogenated hydrocarbons, esters, ketones, ethers, mono- and polyalkylene glycol dialkyl ethers, and mixtures thereof. Examples of suitable aromatic hydrocarbons include, but are not limited to benzene, toluene, xylene, and mixtures thereof. Examples of suitable aliphatic hydrocarbons include, but are not limited to, ethane, propane, butane, hexane, heptane, octane, isoparaffins, and mixtures thereof. As used herein, the term "isoparaffins" refers to a branched C₈₋₂₀ hydrocarbon. Examples of suitable esters include, but are not limited to, methyl acetate, n-butyl acetate, tert-butyl acetate, isobutyl acetate, sec-butyl acetate, ethyl acetate, amyl acetate, pentyl acetate, 2-methyl butyl acetate, isoamyl acetate, n-propyl acetate, isopropyl acetate, ethylhexyl acetate, and mixtures thereof. Examples of suitable ketones include, but are not limited to, acetone, methyl ethyl ketone, and mixtures thereof. Examples of suitable ethers include, but are not limited to, tetrahydrofuran, dibutyl ether, and mixtures thereof. Examples of suitable mono- and polyalkylene glycol dialkyl ethers include, but are not limited to, ethylene glycol monobutyl ether, monoethylene glycol dimethyl ether, diethylene glycol dimethyl ether, triethylene glycol dimethyl ether, tetraethylene glycol dimethyl ether, polyethylene glycol dimethyl ether, dipropylene glycol dimethyl ether, and mixtures thereof. In embodiments, the organic solvent includes an isoparaffin. In embodiments, the organic solvent includes ethylene glycol monobutyl ether. In embodiments, the organic solvent includes an isoparrafin and ethylene glycol monobutyl ether. For example, in embodiments, the organic solvent includes ethylene glycol monobutyl ether and LPA-142 solvent, a high-purity mixture of hydrotreated isoparaffins and naphthenics with very low levels of polynuclear aromatics. Furthermore, when the single-phase liquid is organic, the organic single-phase can be present in an amount of about 60 wt% to about 99 wt%, based on the total weight of the coating composition, for example, at least about 65, 70 75, 80, 85, 90, or 95 wt%, based on the total weight of the coating composition.

### COATING COMPOSITIONS PROVIDED AS DISPERSIONS OF GRAPHENE IN A MULTI-PHASE SYSTEM OF TWO OR MORE IMMISCIBLE LIQUIDS

In embodiments, the dispersion of graphene is in a multi-phase system of two or more immiscible liquids. In a preferred aspect of this embodiment, the dispersion of graphene in a multi-phase system of two or more immiscible liquids is an emulsion. The emulsion can be either an oil-in-water (O/W) emulsion or a water-in-oil (W/O) emulsion. Triple emulsions such as water-in-oil-in-water (W/O/W) emulsions and oil-in-water-in-oil (O/W/O) emulsions are also suitable. Typically, in such embodiments, the coating composition is provided as a dispersion of solid graphene in an oil-in-water (O/W) emulsion.

When a coating composition of the disclosure is provided as a dispersion of graphene is in a multi-phase system of two or more immiscible liquids, the coating composition of the disclosure includes an aqueous phase and an immiscible organic phase. The aqueous phase includes an aqueous solvent, optionally, in further combination with one or more water-miscible, polar, protic solvents. In embodiments, the aqueous solvent comprises deionized (DI) water. The aqueous phase may further include one or more water-miscible, polar, protic solvents including but not limited to isopropyl alcohol, ethanol, ethylene glycol monobutyl ether, or a combination of the foregoing.

The aqueous phase can be present in an amount of about 10 wt% to about 70 wt%, based on the total weight of the coating composition, for example at least about 10, 15, 20, 25, 30, 35, 40, or 45 wt% and/or up to about 40, 45, 50, 55, 60, 65, or 70 wt%, based on the total weight of the coating composition, such as 15 wt% to about 65 wt%, about 20 wt% to about 70 wt%, about 20 wt% to about 60 wt%, about 20 wt% to about 40 wt%, about 40 wt% to about 70 wt%, or about 50 wt% to about 70 wt%.

The coating compositions provided as dispersions of graphene in a multi-phase system of two or more immiscible liquids further include a substantially water-immiscible organic phase. The organic phase comprises an organic solvent. Suitable organic solvents include, but are not limited to, aromatic hydrocarbons, aliphatic hydrocarbons, halogenated hydrocarbons, esters, ketones, ethers, mono- and polyalkylene glycol dialkyl ethers, and mixtures thereof. Examples of suitable aromatic hydrocarbons include, but are not limited to benzene, toluene, xylene, and mixtures thereof. Examples of suitable aliphatic hydrocarbons include, but are not limited to, ethane, propane, butane, hexane, heptane, octane, isoparaffins, and mixtures thereof. As used herein, the term "isoparaffins" refers to a branched C₈₋₂₀ hydrocarbon. Examples of suitable esters include, but are not limited to, methyl acetate, n-butyl acetate, tert-butyl acetate, isobutyl acetate, sec-butyl acetate, ethyl acetate, amyl acetate, pentyl acetate, 2-methyl butyl acetate, isoamyl acetate, n-propyl acetate, isopropyl acetate, ethylhexyl acetate, and mixtures thereof. Examples of suitable ketones include, but are not limited to, acetone, methyl ethyl ketone, and mixtures thereof. Examples of suitable ethers include, but are not limited to, tetrahydrofuran, dibutyl ether, and mixtures thereof. Examples of suitable mono- and polyalkylene glycol dialkyl ethers include, but are not limited to, ethylene glycol monobutyl ether, monoethylene glycol dimethyl ether, diethylene glycol dimethyl ether, triethylene glycol dimethyl ether, tetraethylene glycol dimethyl ether, polyethylene glycol dimethyl ether, dipropylene glycol dimethyl ether, and mixtures thereof. In embodiments, the organic solvent includes an isoparaffin. In embodiments, the organic solvent includes ethylene glycol monobutyl ether. In embodiments, the organic solvent includes an isoparrafin and ethylene glycol monobutyl ether. For example, in embodiments, the organic solvent includes ethylene glycol monobutyl ether and LPA-142 solvent, a high-purity mixture of hydrotreated isoparaffins and naphthenics with very low levels of polynuclear aromatics. While certain are miscible with other organic solvents, so as to form a single phase liquid, they may also be miscible with an aqueous solvent system. For example, ethylene glycol monobutyl ether is miscible in both aqueous and organic solvent systems. In such instances, if a given solvent is more soluble in the aqueous phase than the corresponding organic phase of the two phase system, such solvents are considered to be present in the aqueous phase (and vice versa).

The organic solvent can be present in an amount of about 10 wt% to about 70 wt%, based on the total weight of the composition, for example at least about 10, 15, 20, 25, 30, 35, 40, or 45 wt% and/or up to about 40, 45, 50, 55, 60, 65, or 70 wt%, based on the total weight of the composition, such as 15 wt% to about 65 wt%, about 20 wt% to about 70 wt%, about 20 wt% to about 60 wt%, about 20 wt% to about 40 wt%, about 15 wt% to about 30 wt%, about 40 wt% to about 70 wt%, or about 50 wt% to about 70 wt%. In embodiments, the organic solvent is present in an amount of about 15 wt% to about 30 wt%, based on the total weight of the composition.

Either of the aqueous phase or the organic phase can include the graphene. Similarly, either of the aqueous phase or the organic phase can includes the HALS. In embodiments, the aqueous phase includes the graphene and the organic phase includes the HALS. In embodiments, the aqueous phase includes the HALS and the organic phase includes the graphene.

Suitable emulsifying agents which may be used to stabilize the oil-in-solvent emulsions are surfactants including but not limited to WITCONATE^{®} 90 (Akzo Nobel Surfactants, IL); MACKANATE^{®} DOS 70MS and MACKANATE^{®} WCH-II (McIntyre Group, IL); ALKATERGE^{®} T-IV (Dow Chemical Company, MI); EUMULGIN^{®} O5 and CUTINA^{®} E24 (Cognis, Ohio); BRIJ^{®} 35, BRIJ^{®} 30, BRIJ^{®} 98, CIRRASOL^{™} G-1086, TWEEN^{®} 80, TWEEN^{®} 40, TWEEN^{®} 20, TWEEN^{®} 60, HYPERMER^{®} A394 (Uniqema, Del.), and mixtures of such surfactants. Of course, other surface active substances that stabilize oil-in-water emulsions may also be used.

Suitable emulsifying agents which may be used to stabilize the water-in-oil emulsions are surfactants including but not limited to LAMEFORM^{®} TGI, MONOMULS 90-018^{®}, DEHYMULS^{®} PGPH, DEHYMULS^{®} HRE7, EMEREST^{®} 2712, and EMEREST^{®} 2452 (Cognis, Ohio); BRIJ^{®} 93 VEG, SPAN^{®} 80, ATLOX^{®} 4912, HYPERMER^{®} B246SF (Uniqema, Del.), and mixtures of such surfactants. Of course, any other surface active substances that stabilize oil-in-water emulsions may also be used.

### KITS FOR COATING SURFACES

The disclosure further provides kits for coating surfaces, such as surfaces of an automobile bodiy, a boat, a piece of luggage, a piece of furniture, a spa, a table, a chair, and the like. The kits can include a composition according to the disclosure and an applicator, for example, a microfiber towel or a "block" applicator or a foam applicator. The composition can be packaged, for example, within a container such as a bottle or spray can. The kit can further include instructions for use. The instructions can describe the application of the composition to a surface to provide a coating. In embodiments, the kit includes instructions to apply one to ten layers of the composition of the disclosure to a surface (e.g., of an automobile body). The kit can further include instructions to monitor or measure the refractive index of the applied coating. Without intending to be bound by theory, a coating having a high refractive index (e.g., at least about 1) may exhibit a higher luster, as compared to a coating having a lower refractive index.

### APPLICATIONS FOR COMPOSITIONS

The compositions of the disclosure are particularly useful for coating and preserving various automotive and household items, such as automobiles, boats, a piece of luggage, outdoor furniture, a spa, a table, a chair, and the like. In embodiments, the disclosure provides a carbon-fiber automobile body panel having a surface treated with the composition. In embodiments, the disclosure provides a vinyl automobile body wrap having a surface treated with the composition of the disclosure. Of course, the compositions may be applied to other articles, but are particularly advantageous when applied to articles comprising fiber-reinforced polymeric materials.

### METHODS OF USING COMPOSITIONS

The disclosure further provides methods of surface treating a vehicle body. The methods include applying one to ten layers of the composition of the disclosure to a surface of the vehicle body to provide a coating. In embodiments, each layer is allowed to dry before the application of the subsequent layer. In embodiments, the layers can be dried under ambient conditions (e.g., room temperature, ambient humidity, etc.). In embodiments, the layers are dried using heat and/or forced air.

The vehicle body can be the body of any suitable vehicle, such as an automobile (e.g., a car, a van, a truck, a bus, a limousine, etc.), a motorcycle, a watercraft (e.g., a boat, a ship), a wagon, a bicycle, a rail vehicle (e.g., a train, a tram), an amphibious vehicle (e.g., a screw-propelled vehicle, a hovercraft), an aircraft (e.g., an airplane, a helicopter), or a spacecraft.

The composition can be applied to the vehicle body using a number of suitable methods. For example, the composition can be applied via wiping, spraying, and/or brushing. In embodiments, the composition is applied via wiping. For example, the composition can be applied similar to how a wax is applied to a vehicle body. In embodiments, the composition is applied via spraying. In embodiments, the composition is applied via brushing. In embodiments, individual layers can be applied using combinations of different application methods.

The above described aspects and embodiments can be better understood in light of the following examples, which are merely intended to be illustrative and are not meant to limit the scope in any way.

### EXAMPLES

### Example 1

A coating composition is prepared as a dispersion in a single-phase aqueous liquid.

The aqueous phase is prepared by admixing 455 g of water, 25 g of an organosilane, specifically, water-based, cationic, reactive silane emulsion, Flexipel^{™} Q-50 (Innovative Chemical Technologies, Inc.) (2-7% actives), 10 g of isopropyl alcohol (IPA), and 10 g of ethylene glycol monobutyl ether. HALS and graphene nanoplatelets are incorporated by adding 10 g of a liquid NOR-group HALS, Tinuvin^{®} 123-DW (N) (30% actives) (BASF SE), and 20 g of a graphene dispersion, Genable^{®} 1050 dispersion (10% actives; D50 = 1-3 microns) (Applied Graphene Materials plc), respectively, to the mixture. Admixing is subsequently performed until a substantially homogeneous dispersion in a single aqueous liquid phase is achieved.

In a further example, a tris-resorcinol triazine UV absorber is also incorporated by adding 10 g of Tinuvin^{®} 477-DW (N) (20% active) (BASF SE) at the same time the HALS and graphene nanoplatelets are added to the aforementioned aqueous phase.

The coating composition is provided in Table 1, below.

**Table 1:**

| **Component** | **Mass (g)** | % **wt** |
|---|---|---|
| Distilled Water | 455 | 85.8 |
| Ceramic film-former source | 25 | 4.7 |
| Isopropyl alcohol | 10 | 1.9 |
| Ethylene glycol monobutyl ether | 10 | 1.9 |
| HALS source | 10 | 1.9 |
| Graphene source | 20 | 3.8 |

### Example 2

A coating composition is prepared as a dispersion in a single-phase organic liquid.

The organic phase was prepared by admixing about 465 g of a paraffinic napthenic solvent, LPA-142 (Sasol Chemicals (USA) LLC), and 25 g of ethylene glycol monobutyl ether, and 10 g of a polar, solvent-based, cationic, reactive silane solution, Flexipel^{™} Q-1000 (Innovative Chemical Technologies, Inc.) (72% active). HALS and graphene nanoplatelets are incorporated by adding 10 g of a NOR-group HALS, 2.5 g of Tinuvin^{®} 123 (liquid, 100% active) and 10 g of a graphene dispersion, Genable^{®} 1031 dispersion (Applied Graphene Materials plc) (10% active, D50 = 2-4 microns), to the mixture. Admixing is again performed until a substantially homogeneous dispersion in a single organic liquid phase is achieved.

In a further example, a tris-resorcinol triazine UV absorber is also incorporated by adding 5 g of Tinuvin^{®} 477 (80% active) at the same time the HALS and graphene nanoplatelets are added to the aforementioned organic phase.

The coating composition is provided in Table 2, below.

**Table 2:**

| **Component** | **Mass (g)** | % **wt** |
|---|---|---|
| Paraffinic napthenic solvent | 465 | 90.7 |
| Ethylene glycol monobutyl ether | 25 | 4.9 |
| Organosilane source | 10 | 2.0 |
| HALS source | 2.5 | .5 |
| Graphene dispersion | 10 | 2.0 |

### Example 3

A coating composition GNP45.2 was prepared as a dispersion in a single-phase organic liquid.

The organic phase was prepared by admixing about 85.8 g of a paraffinic napthenic solvent, LPA-142 (Sasol Chemicals (USA) LLC), 2.0 g of ethylene glycol monobutyl ether (glycol ether eb), 5.0 g of diethylene glycol monobutyl ether (glycol ether db), and 5.0 g of a polar, solvent-based, cationic, reactive silane, Flexipel^{™} Q-1000 (Innovative Chemical Technologies, Inc.) (72% active solution in methanol) to form a mixture.

HALS, a tris-resorcinol triazine UV absorber, and graphene nanoplatelets were incorporated by adding 1.0 g of a non-interacting low basicity aminoether (NOR) HALS, Tinuvin^{®} 152 (BASF, 100% active); 1.0 g of Tinuvin^{®} 477 (BASF, ~80% active); and 0.2 g of a graphene dispersion, AGNP45 (Applied Graphene Materials plc) (20 wt% graphene nanoplatelets dispersion in white spirit (i.e., a mixture of mainly aliphatic paraffin hydrocarbons also containing aromatic hydrocarbons), D90 of 10-30 microns, aspect ratio of 2000 to 15000), to the organic phase mixture. Admixing was performed until a substantially homogeneous dispersion in a single organic liquid phase is achieved.

**Table 3: The coating composition GNP45.2 based on the total weight of the coating composition.**

| Component | Mass (g) | wt.% |
|---|---|---|
| Paraffinic napthenic solvent (LPA142) | 85.8 | 85.8 |
| Ethylene glycol monobutyl ether (glycol ether eb) | 2.0 | 2.0 |
| Diethylene glycol monobutyl ether (glycol ether db) | 5.0 | 5.0 |
| Organosilane source (Flexipel^{™} Q-1000) | 5.0 | 5.0 |
| HALS source (Tinuvin^{®} 152) | 1.0 | 1.0 |
| Tinuvin^{®} 477 | 1.0 | 1.0 |
| Graphene Dispersion (AGNP45) | 0.2 | 0.2 |

### Example 4

A further coating composition GNP45.5 was prepared as a dispersion in a single-phase organic liquid.

The organic phase was prepared by admixing about 85.5 g of a paraffinic napthenic solvent, LPA-142 (Sasol Chemicals (USA) LLC), 2.0 g of ethylene glycol monobutyl ether (glycol ether eb), 5.0 g of diethylene glycol monobutyl ether (glycol ether db), and 5.0 g of a polar, solvent-based, cationic, reactive silane, Flexipel^{™} Q-1000 (Innovative Chemical Technologies, Inc.) (72% active solution in methanol) to form a mixture.

HALS a tris-resorcinol triazine UV absorber, and graphene nanoplatelets were incorporated by adding 1.0 g of a non-interacting low basicity aminoether (NOR) HALS, Tinuvin^{®} 152 (100% active); 1.0 g of Tinuvin^{®} 477 (BASF) (~80% active); and 0.5 g of AGNP45 graphene dispersion (Applied Graphene Materials plc) (20 wt% graphene nanoplatelets dispersion in white spirit (i.e., a mixture of mainly aliphatic paraffin hydrocarbons also containing aromatic hydrocarbons), D90 of 10-30 microns, aspect ratio of 2000 to 15000), to the organic phase mixture. Admixing was again performed until a substantially homogeneous dispersion in a single organic liquid phase is achieved.

**Table 4: The coating composition GNP45.5 based on the total weight of the coating composition.**

| Component | Mass (g) | wt.% |
|---|---|---|
| Paraffinic napthenic solvent (LPA142) | 85.5 | 85.5 |
| Ethylene glycol monobutyl ether (glycol ether eb) | 2.0 | 2.0 |
| Diethylene glycol monobutyl ether (glycol ether db) | 5.0 | 5.0 |
| Organosilane source (Flexipel^{™} Q-1000) | 5.0 | 5.0 |
| HALS source (Tinuvin^{®} 152) | 1.0 | 1.0 |
| Tinuvin^{®} 477 | 1.0 | 1.0 |
| Graphene Dispersion (AGNP45) | 0.5 | 0.5 |

### Example 5

### Xenon Arc Weathering Test

To evaluate the weather resistance properties of the coating formed from the coating compositions of Examples 3 and 4 of the present disclosure, an Xenon arc weathering test according to the ASTM G155 (3rd, 09-2021) standard was conduct on each of the coated substrate samples of the present disclosure. The experimental results of the examples are compared with control examples and comparative examples, namely carbon-fiber substrates without the coating of the present disclosure as detailed below with the control example not including any clear coating and the comparative example including a comparative commercially available product.

The test method according to ASTM G155 was used to evaluate coating performance. The test equipment used in this study is an Atlas Ci4000 Weatherometer. Color and gloss measurements of all samples were taken on each sample prior to testing. All the samples were then secured on holders and placed into the weathering chamber of the test equipment. The exposure was for 1500 hours (h). At every 250h, gloss and color measurements were taken. At 750h, a coating of the present disclosure was reapplied to the surface of the test samples. Measurements of the color and gloss are recorded and detailed below.

As discussed in the background, there are several factors that cause and accelerate clear coat degradation: higher temperatures, exposure to UV, exposure to water, exposure to dirt, and exposure to a combination thereof. The disclosed coating compositions advantageously provide clear coats that protect carbon fiber substrates from such environmental hazards that stimulate vehicle clear coat and/or carbon fiber degradation. Specifically, the following examples demonstrate that the protective coating of the present disclosure is a detailing product designed specifically to mitigate, stop, and/or prevent the degradation of carbon fiber and/or protective caused by ultraviolet (UV) light, water, moisture, dirt, and/or heat. The following examples demonstrate that application of the coating compositions of the present disclosure, particularly on carbon fiber substrates, provides high gloss, superior hydrophobicity, scratch protection, and longevity, but also advantageously prevents yellowing primarily associated with UV rays (which are effectively magnified by the applied protective clear coating).

Definitions: "L*a*b Color Values" communicate color information as is well known. The term "L*" as used herein refers to Lightness; the term "a*" as used herein refers to the Red/Green Value; and the term "b*" as used herein refers to the Blue/Yellow Value. In this study, the b* values of the samples tested are detailed below, as these values demonstrate the extent of damage caused by yellowing.

The measurement scale, Gloss Units (GU), is a scaling based on a highly polished reference black glass standard with a defined refractive index having a specular reflectance of 100GU at the specified angle. This standard is used to establish an upper point calibration of 100 with the lower end point established at 0 on a perfectly matte surface.

### Preparation of Test Samples and Control Samples:

In this study, two different types of substrates as detailed below are used to prepare the test samples and the control samples. The examples according to the invention were prepared by: applying a conventional clear coat (PPG Industries, Inc) on one of the two types of substrates and then applying the coating composition of the present disclosure (according to Examples 3 or 4, above) over or on top of the conventional clear coat. Control examples were prepared by: 1) applying a clear coat on one of the two substrates to form a control example without a top coating; and comparative examples were prepared by 2) applying a clear coat first on one of the two substrates and then applying a commercially available ceramic coating comprising graphene (Ethos Handcrafted Car Care, CA) on top of the conventional clear coat to form a comparative example with a commercially available state-of-the-art protective top coating. The two types of substrate are each detailed below.

Substrate 1: Carbon-fiber substrate 1's were prepared by molding and baking pre-impregnated materials (Gurit Holding, AG) according to standard procedures.

Substrate 2: Carbon-fiber substrate 2's were prepared by molding and baking pre-impregnated materials (G-83CM prepreg system, Toray Composite Materials, Inc.) according to standard procedures..

Clear Coat: A conventional clear coat with good scratch resistance was used the base coating for all examples including examples according to the disclosure, control examples, and comparative examples. The selected clear coat is formulated for automotive vehicles to produce a coating with superior appearance and durability.

Coating Compositions of the Present Disclosure: Two different coating compositions of the present disclosure were prepared as described in Example 3 and Example 4 respectively.

**Table 5. Detailed sample configuration information of the examples according to the disclosure, control examples, and comparative examples using substrate 1.**

| **Test / Control sample** | **Substrate** | **Base Coating** | **Top Protective Coating** |
|---|---|---|---|
| Control 1 | 1 | Clear Coat | No Top Coating |
| Control 2 | 1 | Clear Coat | No Top Coating |
| Example 1 | 1 | Clear Coat | GNP45.5 |
| Example 2 | 1 | Clear Coat | GNP45.5 |
| Example 3 | 1 | Clear Coat | GNP45.5 |
| Example 4 | 1 | Clear Coat | GNP45.5 |
| Example 5 | 1 | Clear Coat | GNP45.5 |
| Example 6 | 1 | Clear Coat | GNP45.5 |
| Example 7 | 1 | Clear Coat | GNP45.5 |
| Example 8 | 1 | Clear Coat | GNP45.5 |
| Example 9 | 1 | Clear Coat | GNP45.5 |
| Comparative Example 1 | 1 | Clear Coat | Commercially Available Top Coating |

**Table 6. Detailed sample configuration information of the examples according to the disclosure, control examples, and comparative examples using substrate 2.**

| **Test / Control sample** | **Substrate** | **Base Coating** | **Top Protective Coating** |
|---|---|---|---|
| Control 3 | 2 | Clear Coat | No Top Coating |
| Control 4 | 2 | Clear Coat | No Top Coating |
| Example 10 | 2 | Clear Coat | GNP45.2 |
| Example 11 | 2 | Clear Coat | GNP45.2 |
| Example 12 | 2 | Clear Coat | GNP45.5 |
| Example 13 | 2 | Clear Coat | GNP45.5 |
| Comparative Example 3 | 2 | Clear Coat | Commercially Available Top Coating |
| Comparative Example 4 | 2 | Clear Coat | Commercially Available Top Coating |

The examples according to the disclosure, control examples, and comparative examples (shown in Tables 5-6 above) were introduced to an Operating Xenon Arc Lamp Apparatus for testing. The samples were exposed to the apparatus for an initial period of 750 hours, simulating 6 months of real-world exposure. After the first 750 hours, all of the examples including a coating composition according to the disclosure (either GNP45.2 or GNP45.5) were retreated with the corresponding coating compositions of the disclosure and reintroduced to the apparatus for an additional period of 750 hours. Testing is performed in accordance with ASTM G155. ASTM G155 simulates real-world conditions of sunlight exposure, heat, and moisture, and provides measurements demonstrating how well substrates withstand these conditions. All examples were monitored and removed from the apparatus at 250-hour intervals for photography and color and gloss measurements.

### Test Results and Discussion:

The test results for each of the examples are shown in Tables 7-14 and discussed in details below.

### Substrate 1 Results

In this study, all examples were prepared by baking and molding a prepreg material (Gurit Holding, AG) and applying the conventional clear coat (PPG Industries, Inc.) on top of molded and baked substrates. The examples according to the disclosure were prepared by applying the coating composition of Example 4 as a further protective, top coating on top of the clear coat. The control examples did not have a top coating. The comparative examples were prepared by applying a commercially available ceramic coating composition also including graphene as the protective, top coating. Both the commercially available coating composition and the coating compositions of Example 4 were similarly applied using a spray bottle and a block applicator.

With respect to the LAB color measurements, only the b* value, the blue/yellow scale, shows significant changes over the course of testing and therefore only the average b* values are shown Table 7 and further discussed below. The average gloss values for all the samples tested are calculated and summarized in Table 8 and further discussed below.

**Table 7. The average b* values for the examples according to the disclosure, control examples, and comparative examples using carbon-fiber substrate 1**

| | Average b* values at testing time (hours) | | | | | | |
|---|---|---|---|---|---|---|---|
| Test time (hours) | 0 | 250 | 500 | 750 | 1000 | 1250 | 1500 |
| Control example | .84 | 1.07 | 1.26 | 1.53 | 1.82 | 1.93 | 2.12 |
| Examples (GNP45.5) | .84 | 1.04 | 1.24 | 1.49 | 1.70 | 1.81 | 2.06 |
| Comparative examples | .74 | 1.48 | 2.05 | 2.37 | | | |

**Table 8. The average gloss values forexamples according to the disclosure, control examples, and comparative examples using carbon-fiber substrate 1 .**

| | Average gloss values at testing time (hours) | | | | | | |
|---|---|---|---|---|---|---|---|
| Test time (hours) | 0 | 250 | 500 | 750 | 1000 | 1250 | 1500 |
| Control examples | 92.45 | 89.60 | 92.00 | 90.60 | 90.20 | 89.15 | 88.95 |
| Examples (GNP45.5) | 94.67 | 91.17 | 92.16 | 91.04 | 93.39 | 91.00 | 89.12 |
| Comparative examples | 100.00 | 100.00 | 91.60 | 91.20 | | | |

From the experimental data shown in Tables 7 and 8, it is apparent that many of the examples according to the disclosure, control examples, and comparative examples start at different points of b* and gloss values. However, it is the change in values that are the most important indicators of the weathering resistance properties of the coatings. The average delta b* values and the average delta gloss values for each of the samples are summarized in Tables 9 and 10 below.

**Table 9. The average delta b* values for examples according to the disclosure, control examples, and comparative examples using carbon-fiber substrate 1**

| | Average delta b* values at testing time (hours) | | | | | |
|---|---|---|---|---|---|---|
| Test time (hours) | 250 | 500 | 750 | 1000 | 1250 | 1500 |
| Control examples | 0.23 | 0.42 | 0.69 | .98 | 1.09 | 1.28 |
| Examples (GNP45.5) | 0.20 | 0.39 | 0.64 | 0.85 | 0.97 | 1.21 |
| Comparative examples | 0.74 | 1.31 | 1.63 | | | |

Table 10. The average delta gloss values for examples according to the disclosure, control examples, and comparative examples using carbon-fiber substrate 1.

Examples according to the disclosure and the comparative examples were both observed to provide similar ease of use/application, similar initial gloss, and similar hydrophobicity. Over time, however, the experimental results shown in Tables 7-10, clearly demonstrate that the examples having the coating composition of Example 4 result in: a surprisingly significant reduction in the degradation of gloss, particularly relative to the comparative examples including a comparably applied commercially available ceramic coating. Moreover, the examples having the coating composition of Example 4 demonstrate gloss maintenance performance that is unexpectedly substantially similar to the originally applied OEM top coating. In addition, the examples with the coating composition of Example 4 result in a surprisingly significant reduction in changes in b* value and thus demonstrate a significantly reduced shift toward the yellow color scale, particularly relative to the comparative examples including a comparably applied commercially available ceramic coating. Further, the examples having the coating composition of Example 4 demonstrate color maintaining performance that is unexpectedly substantially similar to the originally applied OEM top coating. The performance of a coating composition that is capable of being readily applied using a microfiber or foam applicator and provides gloss maintaining and color maintaining performance protection of a fiber substrate nearly as well as the OEM-applied topcoat, prior to any significant aging thereof, is surprising and unexpected.

### Substrate 2 Results

In this study, all examples were prepared by baking and molding G-83CM prepreg material (Toray Composite Materials America, Inc.) and applying the industry-standard clear coat (PPG Industries, Inc.) on top of the molded and baked substrates. The examples according to the disclosure were prepared by applying the coating compositions of Examples 3 and 4 as a further protective, top coating on top of the clear coat. The control examples did not have a top coating. The comparative examples were prepared by applying a commercially available ceramic coating composition also including graphene as the protective, top coating. Both the commercially available coating composition and the coating composition of Examples 3 and 4 were similarly applied using a spray bottle and a block applicator.

With respect to the LAB color measurements, only the b* value, the blue/yellow scale, shows significant changes over the course of testing and therefore only the average b* values are shown Table 11 and further discussed below. The average gloss values for all the samples tested are calculated and summarized in Table 12 and further discussed below.

**Table 11. The average b* values for the examples according to the disclosure, control examples, and comparative examples using carbon-fiber substrate 2**

| | Average b* values at testing time (hours) | | | | | | |
|---|---|---|---|---|---|---|---|
| Test time (hours) | 0 | 250 | 500 | 750 | 1000 | 1250 | 1500 |
| Control examples | 1.78 | 4.26 | 4.35 | 4.50 | 4.18 | 4.16 | 4.00 |
| Examples (AGNP45.2) | 1.68 | 4.14 | 4.16 | 4.17 | 4.09 | 3.86 | 3.66 |
| Examples (AGNP45.5) | 1.51 | 4.12 | 4.19 | 4.19 | 4.04 | 3.76 | 3.61 |
| Comparative examples | 1.78 | 4.06 | 4.22 | 4.38 | | | |

**Table 12. The average gloss values for the examples according to the disclosure, control examples, and comparative examples using carbon-fiber substrate.**

| | Average gloss values at testing time (hours) | | | | | | |
|---|---|---|---|---|---|---|---|
| Test time (hours) | 0 | 250 | 500 | 750 | 1000 | 1250 | 1500 |
| Control examples | 95.80 | 89.80 | 90.55 | 89.65 | 88.45 | 87.10 | 86.70 |
| Examples (AGNP45.2) | 90.20 | 90.05 | 91.35 | 88.45 | 89.90 | 88.80 | 87.80 |
| Examples (AGNP45.5) | 94.30 | 90.65 | 90.85 | 89.80 | 90.35 | 89.55 | 86.25 |
| Comparative examples | 100.0 | 100.0 | 90.90 | 91.00 | | | |

From the experimental data shown in Tables 11 and 12, it is apparent that many of the examples according to the disclosure, control examples, and comparative examples start at different points of b* and gloss values. However, it is the change in values that are the most important indicators of the weathering resistance properties of the coatings. The average delta b* values and the average delta gloss values for each of the samples are summarized in Tables 13 and 14 below.

**Table 13. The average delta b* values for examples according to the disclosure, control examples, and comparative examples using carbon-fiber substrate 2.**

| | Average delta b* values at testing time (hours) | | | | | |
|---|---|---|---|---|---|---|
| Test time (hours) | 250 | 500 | 750 | 1000 | 1250 | 1500 |
| Control example | 2.49 | 2.58 | 2.72 | 2.41 | 2.39 | 2.22 |
| Examples (GNP45.2) | 2.47 | 2.48 | 2.50 | 2.42 | 2.19 | 1.99 |
| Examples (GNP45.5) | 2.61 | 2.68 | 2.68 | 2.53 | 2.25 | 2.10 |
| Comparative example | 2.28 | 2.44 | 2.60 | | | |

**Table 14. The average delta gloss values for examples according to the disclosure, control examples, and comparative examples using carbon-fiber substrate 2.**

| | Average delta gloss values at testing time (hours) | | | | | |
|---|---|---|---|---|---|---|
| Test time (hours) | 250 | 500 | 750 | 1000 | 1250 | 1500 |
| Control examples | 6.00 | 5.25 | 6.15 | 7.35 | 8.70 | 9.10 |
| Examples (GNP45.2) | 0.15 | -1.15 | 1.75 | 0.30 | 1.40 | 2.40 |
| Examples (GNP45.5) | 3.65 | 3.45 | 4.50 | 3.95 | 4.75 | 8.05 |
| Comparative examples | 0.00 | 9.10 | 9.00 | | | |

Examples according to the disclosure and the comparative examples were both observed to provide similar ease of use/application, similar initial gloss, and similar hydrophobicity. Over time, however, the experimental results shown in Tables 11--14, clearly demonstrate that the examples having the coating composition of Examples 3 and 4 result in: a surprisingly significant reduction in the degradation of gloss, particularly relative to the comparative examples including a comparably applied commercially available ceramic coating. Moreover, the examples having the coating composition of Examples 3 and 4 demonstrate gloss maintenance performance that is unexpectedly better than the originally applied OEM top coating. In addition, the examples with the coating compositions of Examples 3 and 4 demonstrate color maintaining performance (as shown by delta b* values) that is unexpectedly substantially similar to the originally applied OEM top coating. The performance of a coating composition that is capable of being readily applied using a microfiber or foam applicator and provides gloss maintaining and color maintaining performance protection of a fiber substrate nearly as well as the OEM-applied topcoat, prior to any significant aging thereof, is surprising and unexpected.

## Claims

1. A coating composition comprising graphene having an aspect ratio between 2000 and 15000, a ceramic film-forming agent, a UV absorber and a hindered amine light stabilizer (HALS) in a liquid, wherein the graphene comprises graphene nanoplatelets (GNPs), graphene oxide nanoplatelets (GNOPs), or a combination thereof, the UV absorber has a structure based on triazine, benzophenone or benzotriazole, and the ceramic film-forming agent comprises a reactive silicone polymer.

2. The coating composition of claim 1, wherein the ceramic film-forming agent is an organosilane that is a polysiloxane precursor.

3. The coating composition of any preceding claim, wherein organosilane comprises an organosilane quaternary ammonium compound.

4. The coating composition of claim 3, wherein the organosilane quaternary ammonium compound has the following formula: 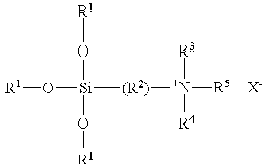 wherein R¹=hydrogen and/or C₁ to C₄ alkyl; R²=divalent hydrocarbon with C₁ to C₈ carbon atoms; R³=hydrogen or C₁ to C₄ alkyl; R⁴=hydrogen or C₁ to C₁₀ alkyl; R⁵=C₈ to C₂₂ saturated or unsaturated hydrocarbon radical and X=halide.

5. The coating composition according to any one of the preceding claims, wherein the UV-absorber is present in an amount of 0.01 to 2 wt.-%, 0.05 to 2 wt.-%, 0.05 to 1.5 wt.-%, 0.05 to 1 wt.-%, 0.1 to 1 wt.-%, 0.1 to 2 wt.-%, 0.1 to 1.5 wt.-%, 0.5 to 1.5 wt.-%, or 0.5 to 2 wt% based on the total weight of the coating composition.

6. The coating composition of any preceding claim, wherein the graphene comprises GNPs.

7. The coating composition of any preceding claim, wherein the graphene is present in an amount of about 0.001 to 5 wt.-%, 0.002 to 4.5 wt.-%, 0.005 to 4 wt.-%, 0.01 to 3.5 wt.-%, 0.05 to 3 wt.-%, 0.1 to 2.5, 0.1 to 1 wt.-%, 0.25 to 2 wt.-%, for example, 0.02 to 0.20 wt.-%, 0.03 to 0.15 wt.-%, or 0.4 to 0.15 wt.-% based on the total weight of the coating composition.

8. The coating composition of any preceding claim, wherein the HALS is present in an amount of about 0.05 to 5 wt.-%, 0.05 to 4 wt.-%, 0.05 to 3 wt.-%, 0.05 to 2 wt.-%, 0.05 to 1 wt.-%, 0.1 to 1 wt.-%, 0.1 to 2 wt.-%, 0.1 to 5 wt.-%, 0.5 to 1.5 wt.-%, or 0.5 to 2.5 wt%, based on the total weight of the coating composition.

9. The coating composition of any preceding claim further comprising an additive selected from the group consisting of a blue colorant, titanium dioxide, a near-infrared (NIR) reflective polymer, a dispersant, a surfactant, and any combination thereof.

10. The coating composition of claim 9, wherein coating composition comprises the blue colorant.

11. The coating composition of any preceding claim, wherein the coating composition is a dispersion of graphene in a single-phase liquid, the single-phase liquid comprising an aqueous solvent system or an organic solvent system.

12. The coating composition of any of claims 1-11, wherein the coating composition is a dispersion of graphene in a multi-phase system of two or more immiscible liquids, the two or more liquids comprising an aqueous phase and an organic phase.

13. A carbon-fiber automobile body surface treated with the composition of any one of claims 1-12.

14. A vinyl automobile body wrap surface treated with the composition of any one of claims 1-12.

15. A method of surface treating an vehicle body comprising applying a layer of the coating composition of any one of claims 1-12 to a surface of the vehicle body to provide a coating.

## Patentansprüche

1. Beschichtungszusammensetzung, die Graphen mit einem Aspektverhältnis zwischen 2000 und 15000, ein keramisches filmbildendes Mittel, einen UV-Absorber und einen Lichtstabilisator für gehinderte Amine (HALS) in einer Flüssigkeit umfasst, wobei das Graphen Graphen-Nanoplättchen (GNPs), Graphenoxid-Nanoplättchen (GNOPs) oder eine Kombination davon umfasst, der UV-Absorber eine Struktur basierend auf Triazin, Benzophenon oder Benzotriazol aufweist und das keramische filmbildende Mittel ein reaktives Silikonpolymer umfasst.

2. Beschichtungszusammensetzung nach Anspruch 1, wobei das keramische filmbildende Mittel ein Organosilan ist, das ein Polysiloxanvorläufer ist.

3. Beschichtungszusammensetzung nach einem vorhergehenden Anspruch, wobei Organosilan eine quaternäre Organosilan-Ammoniumverbindung umfasst.

4. Beschichtungszusammensetzung nach Anspruch 3, wobei die quartäre Organosilan-Ammoniumverbindung die folgende Formel aufweist: 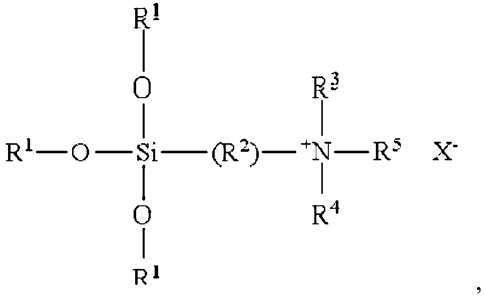 wobei R¹=Wasserstoff und/oder C₁- bis C₄-Alkyl; R²=zweiwertiger Kohlenwasserstoff mit C₁- bis C₈-Kohlenstoffatomen; R³=Wasserstoff oder C₁- bis C₄-Alkyl; R⁴=Wasserstoff oder C₁-bis C₁₀-Alkyl; R⁵=gesättigter oder ungesättigter C₈- bis C₂₂-Kohlenwasserstoffrest und X=Halogenid.

5. Beschichtungszusammensetzung nach einem der vorhergehenden Ansprüche, wobei der UV-Absorber in einer Menge von 0,01 bis 2 Gew.-%, 0,05 bis 2 Gew.-%, 0,05 bis 1,5 Gew.-%, 0,05 bis 1 Gew.-%, 0,1 bis 1 Gew.-%, 0,1 bis 2 Gew.-%, 0,1 bis 1,5 Gew.-%, 0,5 bis 1,5 Gew.-% oder 0,5 bis 2 Gew.-% basierend auf dem Gesamtgewicht der Beschichtungszusammensetzung vorhanden ist.

6. Beschichtungszusammensetzung nach einem vorhergehenden Anspruch, wobei das Graphen GNPs umfasst.

7. Beschichtungszusammensetzung nach einem vorhergehenden Anspruch, wobei das Graphen in einer Menge von etwa 0,001 bis 5 Gew.-%, 0,002 bis 4,5 Gew.-%, 0,005 bis 4 Gew.-%, 0,01 bis 3,5 Gew.-%, 0,05 bis 3 Gew.-%, 0,1 bis 2,5, 0,1 bis 1 Gew.-%, 0,25 bis 2 Gew.-%, zum Beispiel 0,02 bis 0,20 Gew.-%, 0,03 bis 0,15 Gew.-% oder 0,4 bis 0,15 Gew.-% basierend auf dem Gesamtgewicht der Beschichtungszusammensetzung vorhanden ist.

8. Beschichtungszusammensetzung nach einem der vorhergehenden Ansprüche, wobei der HALS in einer Menge von etwa 0,05 bis 5 Gew.-%, 0,05 bis 4 Gew.-%, 0,05 bis 3 Gew.-%, 0,05 bis 2 Gew.-%, 0,05 bis 1 Gew.-%, 0,1 bis 1 Gew.-%, 0,1 bis 2 Gew.-%, 0,1 bis 5 Gew.-%, 0,5 bis 1,5 Gew.-% oder 0,5 bis 2,5 Gew.-% basierend auf dem Gesamtgewicht der Beschichtungszusammensetzung vorhanden ist.

9. Beschichtungszusammensetzung nach einem vorhergehenden Anspruch, ferner umfassend ein Additiv ausgewählt aus der Gruppe bestehend aus einem blauen Farbstoff, Titandioxid, einem im nahen Infrarot (NIR) reflektierenden Polymer, einem Dispergiermittel, einem Tensid und einer beliebigen Kombination davon.

10. Beschichtungszusammensetzung nach Anspruch 9, wobei die Beschichtungszusammensetzung den blauen Farbstoff umfasst.

11. Beschichtungszusammensetzung nach einem vorhergehenden Anspruch, wobei die Beschichtungszusammensetzung eine Dispersion von Graphen in einer einphasigen Flüssigkeit ist, wobei die einphasige Flüssigkeit ein wässriges Lösungsmittelsystem oder ein organisches Lösungsmittelsystem umfasst.

12. Beschichtungszusammensetzung nach einem der Ansprüche 1-11, wobei die Beschichtungszusammensetzung eine Dispersion von Graphen in einem Mehrphasensystem von zwei oder mehr nicht mischbaren Flüssigkeiten ist, wobei die zwei oder mehr Flüssigkeiten eine wässrige Phase und eine organische Phase umfassen.

13. Kohlefaser-Automobilkarosserie-Oberfläche, die mit der Zusammensetzung nach einem der Ansprüche 1-12 behandelt ist.

14. Vinyl-Automobilkarosserie-Umhüllungsoberfläche, die mit der Zusammensetzung nach einem der Ansprüche 1-12 behandelt ist.

15. Verfahren zum Oberflächenbehandeln einer Fahrzeugkarosserie, umfassend Aufbringen einer Schicht der Beschichtungszusammensetzung nach einem der Ansprüche 1-12 auf eine Oberfläche der Fahrzeugkarosserie, um eine Beschichtung bereitzustellen.

## Revendications

1. Composition de revêtement comprenant du graphène ayant un rapport de forme compris entre 2000 et 15000, un agent filmogène céramique, un absorbeur d'UV et un stabilisateur de lumière à amine encombrée (HALS) dans un liquide, dans laquelle le graphène comprend des nanoplaquettes de graphène (GNP), des nanoplaquettes d'oxyde de graphène (GNOP) ou une combinaison de celles-ci, l'absorbeur d'UV a une structure à base de triazine, de benzophénone ou de benzotriazole, et l'agent filmogène céramique comprend un polymère de silicone réactif.

2. Composition de revêtement selon la revendication 1, dans laquelle l'agent filmogène céramique est un organosilane qui est un précurseur de polysiloxane.

3. Composition de revêtement selon l'une quelconque des revendications précédentes, dans laquelle l'organosilane comprend un composé d'ammonium quaternaire d'organosilane.

4. Composition de revêtement selon la revendication 3, dans laquelle le composé d'ammonium quaternaire organosilane présente la formule suivante : 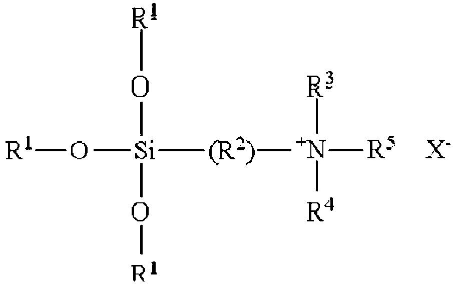 dans laquelle R¹=hydrogène et/ou alkyle en C₁ à C₄ ; R²= hydrocarbure divalent avec des atomes de carbone en C₁ à C₈ ; R³=hydrogène ou alkyle en C₁ à C₄ ; R⁴=hydrogène ou alkyle en C₁ à C₁₀ ; R⁵= radical hydrocarbure saturé ou insaturé en C₈ à C₂₂ et X=halogénure.

5. Composition de revêtement selon l'une quelconque des revendications précédentes, dans laquelle l'absorbeur d'UV est présent en une quantité de 0,01 à 2 % en poids, 0,05 à 2 % en poids, 0,05 à 1,5 % en poids, 0,05 à 1 % en poids, 0,1 à 1 % en poids, 0,1 à 2 % en poids, 0,1 à 1,5 % en poids, 0,5 à 1,5 % en poids, ou 0,5 à 2 % en poids sur la base du poids total de la composition de revêtement.

6. Composition de revêtement selon l'une quelconque des revendications précédentes, dans laquelle le graphène comprend des GNP.

7. Composition de revêtement selon l'une quelconque des revendications précédentes, dans laquelle le graphène est présent en une quantité d'environ 0,001 à 5 % en poids, 0,002 à 4,5 % en poids, 0,005 à 4 % en poids, 0,01 à 3,5 % en poids, 0,05 à 3 % en poids, 0,1 à 2,5, 0,1 à 1 % en poids, 0,25 à 2 % en poids, par exemple, 0,02 à 0,20 % en poids, 0,03 à 0,15 % en poids, ou 0,4 à 0,15 % en poids sur la base du poids total de la composition de revêtement.

8. Composition de revêtement selon l'une quelconque des revendications précédentes, dans laquelle le HALS est présent en une quantité d'environ 0,05 à 5 % en poids, 0,05 à 4 % en poids, 0,05 à 3 % en poids, 0,05 à 2 % en poids, 0,05 à 1 % en poids, 0,1 à 1 % en poids, 0,1 à 2 % en poids, 0,1 à 5 % en poids, 0,5 à 1,5 % en poids, ou 0,5 à 2,5 % en poids, sur la base du poids total de la composition de revêtement.

9. Composition de revêtement selon l'une quelconque des revendications précédentes, comprenant en outre un additif choisi dans le groupe constitué d'un colorant bleu, de dioxyde de titane, d'un polymère réfléchissant le proche infrarouge (NIR), d'un dispersant, d'un tensioactif et de toute combinaison de ceux-ci.

10. Composition de revêtement selon la revendication 9, dans laquelle la composition de revêtement comprend le colorant bleu.

11. Composition de revêtement selon l'une quelconque des revendications précédentes, dans laquelle la composition de revêtement est une dispersion de graphène dans un liquide monophasique, le liquide monophasique comprenant un système de solvant aqueux ou un système de solvant organique.

12. Composition de revêtement selon l'une quelconque des revendications 1 à 11, dans laquelle la composition de revêtement est une dispersion de graphène dans un système multiphase de deux liquides non miscibles ou plus, les deux liquides ou plus comprenant une phase aqueuse et une phase organique.

13. Surface de carrosserie automobile en fibre de carbone traitée avec la composition selon l'une quelconque des revendications 1 à 12.

14. Surface d'enveloppement de carrosserie automobile en vinyle traitée avec la composition selon l'une quelconque des revendications 1 à 12.

15. Procédé de traitement de surface d'une carrosserie de véhicule comprenant l'application d'une couche de la composition de revêtement selon l'une quelconque des revendications 1 à 12 sur une surface de la carrosserie de véhicule pour fournir un revêtement.
